# EUROPEAN PATENT APPLICATION

(11) **EP 2 884 759 A1**
(43) Date of publication of application: **17.06.2015**
(21) Application number: 14167443.2
(22) Date of filing: 07.05.2014
(51) Int. Cl.: H04N 21/44, G06K 9/00, H04H 60/59, H04N 21/443, H04N 21/462, H04N 21/478

(54) **Display device and method for controlling the same**

(30) Priority: 16.12.2013 KR 20130156274
(71) Applicant: LG Electronics, Inc., Seoul 150-721 (KR)
(72) Inventor: Park, Sunghee, 137-893 Seoul (KR); Kim, Doehee, 137-893 Seoul (KR); Park, Chala, 137-893 Seoul (KR); Heo, Ubeom, 137-893 Seoul (KR)
(74) Representative: Cabinet Plasseraud

(57) **Abstract**

A display device comprises a receiving module configured to receive an automatic content recognition, ACR, command signal from an external input means; a communication module configured to perform data communication with an external device; a display module configured to output a content to a screen; an ACR module configured to collect ACR information of the content by performing ACR; a storage module configured to store the ACR information collected by the ACR module; and a controller configured to control an operation of the display device, wherein the controller performs the control operation to perform ACR for the content output on the screen if the ACR command signal is received through the receiving module, collect the ACR information of the content by using ACR, generate a GUI, which includes ACR information and ACR information control icon of the content on the basis of output priority of the collected ACR information according to a type of the content, and output the GUI to the screen.

## Description

### BACKGROUND OF THE INVENTION

### Field of the Invention

The present specification relates to the technology applicable to various display devices, and more particularly, to a display device and a method for controlling the same, in which automatic content recognition, ACR, for a content output from the display device is performed if an ACR command signal for the content is received, and ACR information on the content is output to a screen after priority of the ACR information is determined in accordance with a type of the content.

### Discussion of the Related Art

A display device may output at least one or more contents and broadcast program to a screen. A controller of the display device may collect ACR information of the contents and the broadcast programs output to the screen by using an ACR function. The ACR information may include additional information of the contents and the broadcast programs. Moreover, the display device may perform data communication with an external device paired therewith. Examples of the display device include a cellular phone, a smart phone, a computer, a tablet PC, a notebook computer, a netbook computer, a television (TV) and other broadcast receiving devices.

### SUMMARY OF THE INVENTION

Accordingly, the present specification is directed to a display device and a method for controlling the same, which substantially obviate one or more problems due to limitations and disadvantages of the related art.

An object of the present specification is to provide a display device and a method for controlling the same, in which ACR information of a content is collected and output priority of the collected ACR information is determined differently depending on a type of the content, whereby information preferentially desired by a user is quickly provided to the user per type of the content.

Another object of the present specification is to provide a display device and a method for controlling the same, in which an ACR information control icon is provided together with ACR information, whereby a user may quickly perform a secondary process by using ACR information primarily provided thereto.

Other object of the present specification is to provide a display device and a method for controlling the same, in which a semi-transparent panel type GUI is used if ACR information is provided, whereby a solution for maintaining viewing of a content currently output to a screen is defined specifically.

Additional advantages, objects, and features of the specification will be set forth in part in the description which follows and in part will become apparent to those having ordinary skill in the art upon examination of the following or may be learned from practice of the specification. The objectives and other advantages of the specification may be realized and attained by the structure particularly pointed out in the written description and claims hereof as well as the appended drawings.

To achieve these objects and other advantages and in accordance with the purpose of the specification, as embodied and broadly described herein, a display device according to one embodiment of the present invention comprises a receiving module configured to receive an automatic content recognition (ACR) command signal from an external input means; a communication module configured to perform data communication with an external device; a display module configured to output a content to a screen; an ACR module configured to collect ACR information of the content by performing ACR; a storage module configured to store the ACR information collected by the ACR module; and a controller configured to control an operation of the display device, wherein the controller is further configured to perform ACR for the content output on the screen if the ACR command signal is received through the receiving module, collect the ACR information of the content by using ACR, generate a Graphical User Interface, GUI, including ACR information and ACR information control icon of the content on the basis of output priority of the collected ACR information according to a type of the content, and output the GUI to the screen.

In another aspect of the present invention, a method for controlling a display device according to one embodiment of the present invention comprises the steps of receiving an automatic content recognition (ACR) command signal; performing ACR for a content output on a screen; collecting ACR information of the content by using ACR; generating a GUI including ACR information and ACR information control icon of the content on the basis of output priority of the collected ACR information according to a type of the content; and outputting the GUI to the screen.

According to one embodiment of the present invention, ACR information of contents is collected and output priority of the collected ACR information is determined differently depending on a type of the content, whereby information preferentially desired by a user is quickly provided to the user per type of the content.

Also, according to another embodiment of the present invention, an ACR information control icon is provided together with ACR information, whereby a user may quickly perform a secondary process by using ACR information primarily provided thereto.

And, according to other embodiment of the present invention, a semi-transparent panel type GUI is used if ACR information is provided, whereby a solution for maintaining viewing of contents currently output to a screen is defined specifically.

It is to be understood that both the foregoing general description and the following detailed description of the present specification are exemplary and explanatory and are intended to provide further explanation of the specification as claimed.

### BRIEF DESCRIPTION OF THE DRAWINGS

The accompanying drawings, which are included to provide a further understanding of the specification and are incorporated in and constitute a part of this application, illustrate embodiment(s) of the specification and together with the description serve to explain the principle of the specification. In the drawings:
FIG. 1 is a detailed block diagram illustrating elements a display device according to one embodiment of the present invention;
FIG. 2 is a detailed block diagram illustrating a control module shown in FIG. 1;
FIG. 3 is a brief diagram illustrating appearance of a remote controller according to one embodiment of the present invention;
FIG. 4 is a detailed block diagram illustrating elements of a remote controller shown in FIG. 3;
FIG. 5 is a detailed block diagram illustrating modules of a display device according to another embodiment of the present invention;
FIG. 6 is a perspective diagram illustrating one side of appearance of a display device according to another embodiment of the present invention;
FIG. 7 is a perspective diagram illustrating the other side of appearance of a display device according to another embodiment of the present invention;
FIG. 8 is a detailed block diagram illustrating modules of a display device according to other embodiment of the present invention;
FIG. 9 is a diagram illustrating an example of enabling a display device according to one embodiment of the present invention to output ACR information to a screen;
FIG. 10 is a diagram illustrating an example of enabling a display device according to one embodiment of the present invention to transmit ACR information to an external device;
FIG. 11 is a diagram illustrating an example of enabling a display device according to one embodiment of the present invention to collect ACR information and output the collected ACR information to a screen;
FIG. 12 is a diagram illustrating another example of enabling a display device according to one embodiment of the present invention to transmit ACR information to an external device;
FIG. 13 is a diagram illustrating an example of enabling a display device according to one embodiment of the present invention to collect ACR information by performing ACR;
FIG. 14 is a diagram illustrating an example of enabling a display device according to one embodiment of the present invention to store output priority of ACR information in a data base in accordance with a type of contents;
FIG. 15 is a diagram illustrating an example of enabling a display device according to one embodiment of the present invention to perform a secondary process by receiving a command of a user through an ACR information control icon;
FIG. 16 is a diagram illustrating another example of enabling a display device according to one embodiment of the present invention to perform a secondary process by receiving a command of a user through an ACR information control icon;
FIG. 17 is a diagram illustrating other example of enabling a display device according to one embodiment of the present invention to perform a secondary process by receiving a command of a user through an ACR information control icon;
FIG. 18 is a flow chart illustrating a method for controlling a display device according to one embodiment of the present invention; and
FIGs. 19 to 22 are diagrams illustrating an example of enabling a display device according to one embodiment of the present invention to perform a home cloud function together with an external device.

### DETAILED DESCRIPTION OF THE INVENTION

Reference will now be made in detail to the preferred embodiments of the present specification, examples of which are illustrated in the accompanying drawings. Wherever possible, the same reference numbers will be used throughout the drawings to refer to the same or like parts.

The suffixes "module" and "unit" for the elements used in the following description are given or used in common by considering facilitation in writing this disclosure only but fail to have meanings or roles discriminated from each other. Accordingly, the suffixes "module" and "unit" may be used together.

Moreover, although the embodiments of the present invention will be described in detail with reference to the accompanying drawings and the disclosure described by the drawings, it is to be understood that the present invention is not limited by such embodiments.

Although the terms used in the present specification are selected from generally known and used terms considering their functions in the present invention, the terms can be modified depending on intention of a person skilled in the art, practices, or the advent of new technology. Also, in special case, the terms mentioned in the description of the present invention may be selected by the applicant at his or her discretion, the detailed meanings of which are described in relevant parts of the description herein. Accordingly, the terms used herein should be understood not simply by the actual terms used but by the meaning lying within and the description disclosed herein.

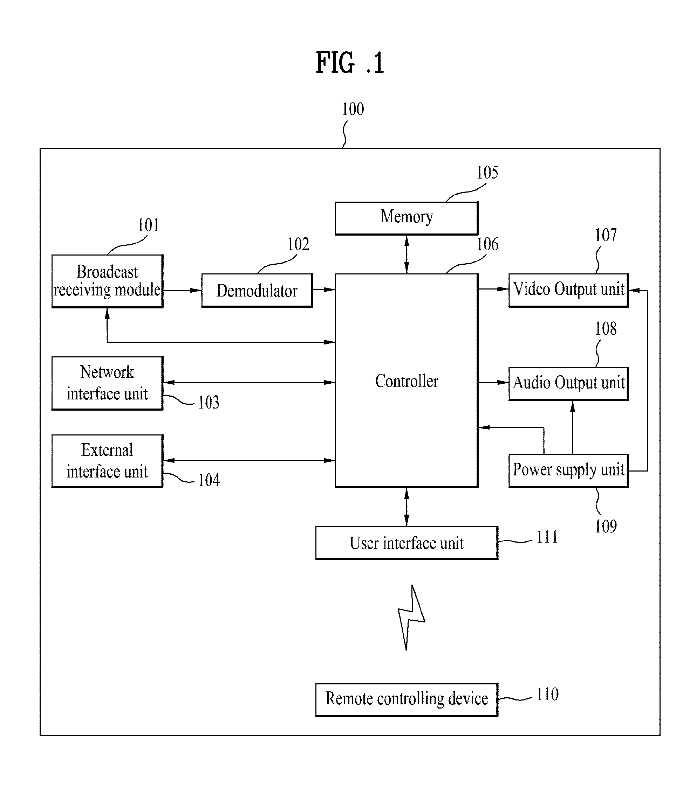

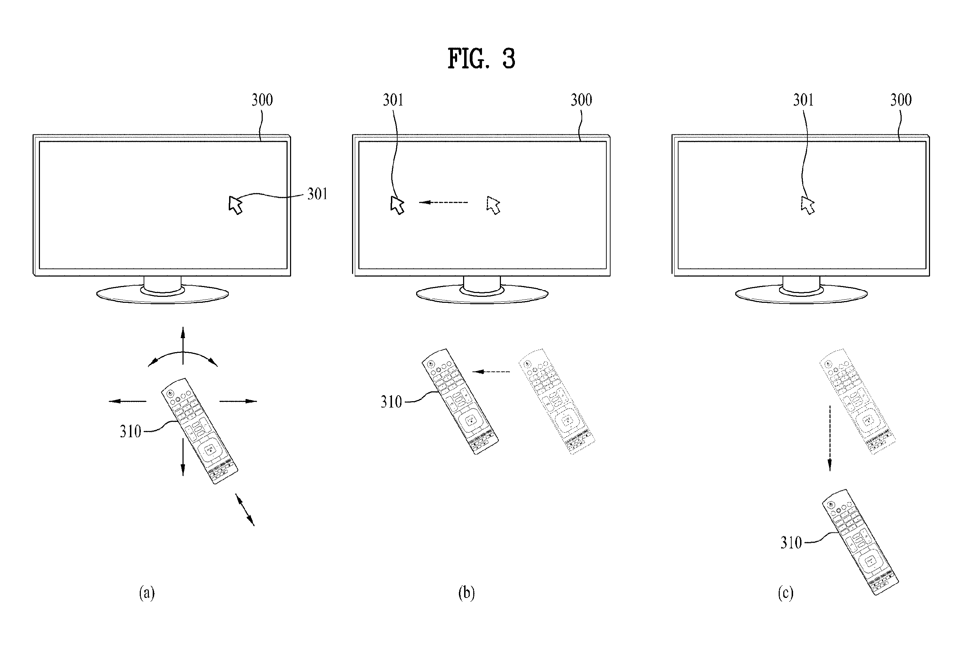

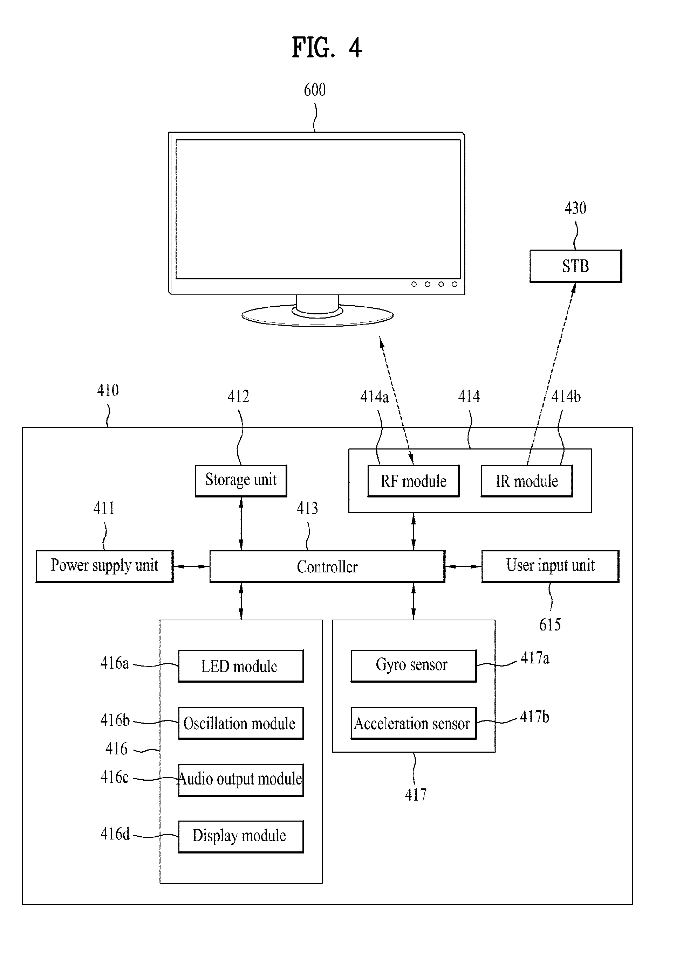

FIG. 1 is a detailed block diagram illustrating elements of a display device according to one embodiment. As shown in FIG. 1, a display device 100 according to one embodiment of the present invention includes a broadcast receiving module 101, a demodulation module 102, a network interface module 103, an external device interface module 104, a memory module 105, a control module 106, a video output module 107, an audio output module 108, a power supply module 109, an external input means 110, and a user interface module 111. Meanwhile, the display device 100 may be designed to perform data communication with a remote controller corresponding to the external input means 11. Hereinafter, the external input means will be referred to as a remote controller, which will be described later in detail with reference to FIGs. 3 and 4.

The broadcast receiving module 101 may be designed as an RF tuner, for example, or may be designed as an interface that receives broadcast data from an external device such as STB. The broadcast receiving module 101 may receive RF broadcast signal of a single carrier based on an advanced television system committee (ATSC) mode or RF broadcast signal of multiple carriers based on a digital video broadcasting (DVB) mode.

The demodulation module 102 performs a demodulation operation by receiving a digital IF (DIF) signal converted by the broadcast receiving module 101. For example, if the digital IF signal output from the broadcast receiving module 101 is based on the ATSC mode, the demodulation module 102 performs 8-vestigal side band (8-VSB) demodulation, for example. Also, the demodulation module 102 may perform channel decoding.

The external device interface module 104 is an interface that enables data communication between the external device and the display device 100. The external device interface module 104 may be connected to the external device such as Digital Versatile Disk (DVD), Blu-ray, game device, camera, camcorder, computer (e.g., notebook computer), STB etc. through wire/wireless cables. The external device interface module 104 transmits a video, audio, or data signal externally input through the external device connected thereto, to the control module 106. Also, the external device interface module 104 may output the video, audio or data signal processed by the control module 106 to the external device. The external device interface module 104 may include a USB terminal, a composite Video Banking Sync (CVBS) terminal, a component terminal, an S-video terminal (analog), a Digital Visual Interface (DVI) terminal, a High Definition Multimedia Interface (HDMI) terminal, an RGB terminal, a D-SUB terminal, etc., for example.

The network interface module 103 provides an interface for connecting the display device 100 with wire/wireless networks including Internet network. The network interface module 103 may include an Ethernet terminal, for example, for wire network connection. For example, Wireless LAN (WLAN)(Wi-Fi), Wireless broadband (Wibro), World Interoperability for Microwave Access (Wimax), High Speed Downlink Packet Access (HSDPA) communication specifications may be used by the network interface module 103 for the wireless network connection. The network interface module 103 may transmit or receive data to and from other users or other display devices through a network connected thereto or another network linked on the connected network.

The memory module 105 may store a program for processing and controlling each signal of the control module 106, or may store the processed video, audio or data signal. Also, the memory module 105 may temporarily store the video, audio or data signal input from the external device interface module 104 or the network interface module 103. The memory module 105 may store various OS, middleware and platforms, for example, therein.

The user input interface module 111 transmits the signal input by the user to the control module 106 or transmits the signal from the control module 106 to the external device (for example, remote controller 110). For example, the user interface module 111 may be designed to receive and process a control signal such as power on/off, channel selection and screen setup from the remote controller 110 in accordance with various communication modes such as RF (radio frequency) communication mode and IR communication mode, or to transmit the control signal from the control module 106 to the remote controller 110.

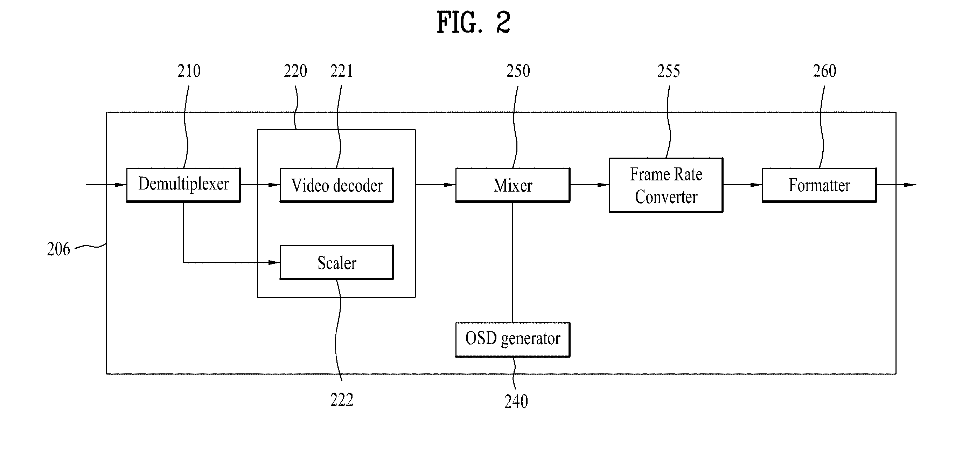

The control module 106 demultiplexes input streams through the broadcast receiving module 101, the demodulation module 102, the network interface module 103 or the external device interface module 104, or processes the demultiplexed signals to generate and output a signal for a video and audio output. The control module 106 will be described later in more detail with reference to FIG. 2.

The video output module 107 converts a video signal, a data signal and an OSD signal, which are processed by the control module 106, or a video signal and a data signal, which are received from the external device interface module 104, to R, G, B signals, respectively, thereby generating a driving signal. Examples of the video output module 107 include PDP, LCD, OLED, flexible display, and 3D display.

The audio output module 108 outputs the signal audio-processed by the control module 106, for example, stereo signal, 3.1 channel signal or 5.1 channel signal, as audio. Various types of speakers may be used as the audio output module 108.

The power supply module 109 supplies the corresponding power to the whole portion of the display device 100. In particular, the power supply module 109 may supply the power to the control module 106 that may be implemented in the form of a system on chip (SOC), the video output module 107 for image display, and the audio output module 108 for audio output.

FIG. 2 is a detailed block diagram illustrating the control module shown in FIG. 1. As shown in FIG. 2, the control module 206 of the display device 206 includes a demultiplexer 210, a video processor 220, an OSD generator 240, a mixer 250, a frame rate converter 255, and a formatter 260. Also, the control module 206 may be designed to further include an audio processor (not shown) and a data processor (not shown).

The demultiplexer 210 demultipelxes input streams. For example, if MPEG-2 TS is input, the demultiplexer 210 demultiplexes the MPEG-2 TS and splits the demultiplexed MPEG-2 TS into a video signal, an audio signal and a data signal.

The video processor 220 may process the demultiplexed video signal. To this end, the video processor 220 may include a video decoder 221 and a scaler 222. The video decoder 221 decodes the demultiplexed video signal, and the scaler 222 performs scaling to output resolution of the decoded video signal through the video output module. The video signal decoded by the video processor 220 is input to the mixer 250.

The OSD generator 240 generates an OSD signal in accordance with a user input or by itself. Accordingly, the mixer 250 may mix the OSD signal generated by the OSD generator 240 with the decoded video signal processed by the video processor 220. The mixed signal is provided to the formatter 260. As the decoded broadcast video signal or the external input signal is mixed with the OSD signal, the OSD may be overlaid on the broadcast video or the external input video.

The frame rate converter (FRC) 255 may convert a frame rate of the input video. For example, the frame rate converter 255 may convert a frame rate of 60Hz to a frame rate of 120Hz or 240Hz.

The formatter 260 receives an output signal converted by the frame rate converter 255, changes a format of the signal to conform to the video output module, and then outputs the changed format. For example, the formatter 260 may output R, G, B data signals. The R, G, B data signals may be output as low voltage differential signaling (LVDS) or mini-LVDS.

FIG. 3 is a brief diagram illustrating appearance of a remote controller according to one embodiment of the present invention.

As illustrated in (a) of FIG. 3, a pointer 301 corresponding to the remote controller 310 is displayed on the screen of the display device 300. The user may move or rotate the remote controller 310 in left and right direction ((b) of FIG. 3) and up and down direction ((c) of FIG. 3). In this way, since the corresponding pointer 301 is moved and displayed in accordance with movement on 3D space, the remote controller 310 may be referred to as a spatial remote controller. As shown in (b) of FIG. 3, if the user moves the remote controller 310 to the left side, the pointer 301 displayed on the screen of the display device 300 moves to the left side correspondingly. Meanwhile, information on movement of the remote controller 310, which is sensed by a sensor of the remote controller 310, is transmitted to the display device 300. The display device 300 may obtain a coordinate of the pointer 301 from the information on movement of the remote controller 310. The display device 300 is designed to display the pointer 301 to correspond to the above coordinate. Meanwhile, as shown in (c) of FIG. 3, if the user moves the remote controller 300 downwardly, the pointer 301 displayed on the screen of the display device 300 moves downwardly. Accordingly, the user may quickly select a specific zone within the screen of the display device 300 by using the remote controller 310 according to one embodiment of the present invention.

FIG. 4 is a detailed block diagram illustrating elements of a remote controller shown in FIG. 3. As shown in FIG. 4, the remote controller 410 includes a wireless communication module 414, a user input module 415, a sensor module 417, an output module 416, a power supply module 411, a storage module 412, and a control module 413.

The wireless communication module 414 is designed to perform communication with a random external device. In particular, according to one embodiment of the present invention, an RF module 414a is designed to perform data communication with the display device 400, and an IR module 414b is designed to perform infrared communication with an external electronic device 430 (for example, STB). Accordingly, the remote controller 410 may be implemented to perform a relay that forwards an IR code value received from the display device 400 to the STB 430. Moreover, according to one embodiment of the present invention, the remote controller 410 transmits a signal, which includes movement of the remote controller 410, to the display device 400 through the RF module 414a. Also, the remote controller 410 may receive the signal, which has been transmitted from the display device 400, through the RF module 414a. The remote controller 410 may transmit a command for power on/off, channel change and volume change to the display device 400 through the IR module 414b if necessary.

The user input module 415 may include a keypad, a button, a touch pad, or a touch screen.

The sensor module 417 may include a gyro sensor 417a and an acceleration sensor 417b. The gyro sensor 417a may sense information on movement of the remote controller 410. For example, the gyro sensor 417a may sense the information on movement of the remote controller 410 on the basis of axes x, y and z. The acceleration sensor 417b may sense information on moving speed of the remote controller 410. The sensor module 417 may further include a distance measurement sensor, and may sense a distance with the display device 400 by using the distance measurement sensor.

The output module 416 may output a video or audio signal corresponding to manipulation of the user input module 415 or the signal transmitted from the display device 400. For example, if the user input module 415 is manipulated, or if the display device 400 transmits and receives a signal through the wireless communication module 414, the output module 416 may include an LED module 416a which is lighted, a vibration module 416b for generating vibration, a sound output module 416c for outputting a sound, or a display module 416d for outputting a video.

The power supply module 411 supplies the power to each element of the remote controller 410. The power supply module 411 may reduce power waste by stopping power supply if the remote controller 410 does not move for a predetermined time.

The storage module 412 may store various kinds of programs and application data, which are required for control or operation of the remote controller 410. The control module 413 controls all the matters related to control of the remote controller 410. For example, the control module 413 may transmit a signal corresponding to a predetermined key manipulation of the user input module 415 or a signal corresponding to movement of the remote controller 410 sensed by the sensor module 417 to the display device 400 or the STB 430 through the wireless communication module 414.

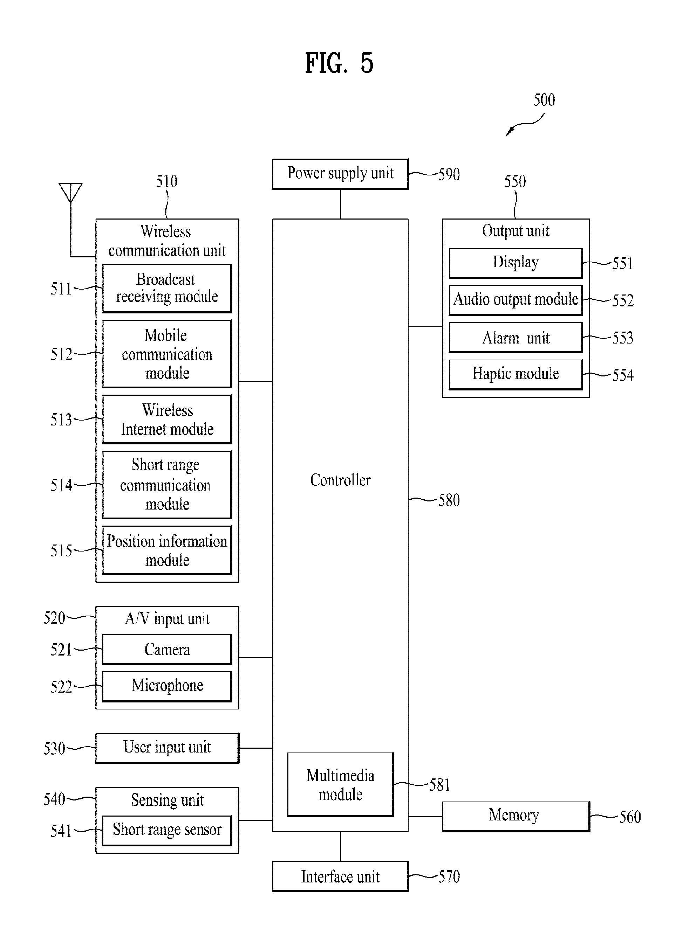

FIG. 5 is a detailed block diagram illustrating modules of a display device according to another embodiment of the present invention. The display device 500 according to another embodiment of the present invention includes a wireless communication module 510, an audio/video (A/V) input module 520, a user input module 530, a sensing module 540, an output module 550, a memory 560, an interface module 570, a control module 580, and a power supply module 590. Since the elements shown in FIG. 5 are not required necessarily, the display device 500 having elements more than or smaller than those shown in FIG. 5 may be provided.

The wireless communication module 510 may include one or more modules that enable wireless communication between the display device 500 and the wireless communication system or between the display device 500 and the network where the display device is located. For example, the wireless communication module 510 may include a broadcast receiving module 511, a mobile communication module 512, a wireless Internet module 513, a short-range communication module 514, and a position information module 515.

The broadcast receiving module 511 receives a broadcast signal or broadcast related information from an external broadcast management server through a broadcast channel. The broadcast channel may include a satellite channel and a terrestrial channel. The broadcast management server may mean a server that generates and transmits a broadcast signal and/or broadcast related information or a server that receives a broadcast signal and/or broadcast related information, which is previously generated, and transmits the broadcast signal and/or the broadcast related information to the device. The broadcast signal may include a broadcast signal where a TV broadcast signal or a radio broadcast signal is combined with a data broadcast signal, as well as the TV broadcast signal, the radio broadcast signal, and the data broadcast signal. The broadcast related information may mean information related to a broadcast channel, a broadcast program or a broadcast service provider. The broadcast related information may be provided through a mobile communication network. In this case, the broadcast related information may be received by the mobile communication module 512. The broadcast related information may exist in various forms. For example, the broadcast related information may exist in the form of electronic program guide (EPG) of digital multimedia broadcasting (DMB) or electronic service guide (ESG) of digital video broadcast-handheld (DVB-H). The broadcast receiving module 511 may receive a digital broadcast signal by using a digital broadcast system such as digital multimedia broadcasting-terrestrial (DMB-T), digital multimedia broadcasting-satellite (DMB-S), media forward link only (MediaFLO), digital video broadcast-handheld (DVB-H), and integrated services digital broadcast-terrestrial (ISDB-T). The broadcast receiving module 511 may be configured to be suitable for other broadcast system as well as the aforementioned digital broadcast system. The broadcast signal or the broadcast related information which are received through the broadcast receiving module 511 may be stored in the memory 560.

The mobile communication module 512 transmits and receives a radio signal to and from at least one of a base station, an external terminal, a server on the mobile communication network. The radio signal may include an audio call signal, a video communication call signal, or various types of data based on message/multimedia message transmission and reception.

The wireless Internet module 513 means a module for wireless Internet connection, and may be installed inside or outside the display device 500. Wireless LAN (WLAN)(Wi-Fi), Wireless broadband (Wibro), World Interoperability for Microwave Access (Wimax), and High Speed Downlink Packet Access (HSDPA) may be used as the wireless Internet technologies.

The short-range communication module 514 means a module for short-range communication. Bluetooth, Radio Frequency Identification (RFID), infrared Data Association (IrDA), Ultra Wideband (UWB), ZigBee, etc. may be used as the technologies for short range communication.

The position information module 515 is a module for acquiring the position of the display device 500, and its example includes a global position system (GPS) module.

Referring to FIG. 5, the A/V input module 520 is intended for audio signal input or video signal input, and may include a camera 521 and a mike 522. The camera 521 processes a picture image frame such as still image or moving picture image, which is obtained by an image sensor in a video call mode or a photographing mode. The processed picture image frame may be displayed on the display module 551.

The picture image frame processed by the camera 521 may be stored in the memory 560 or may be transmitted to the outside through the wireless communication module 510. Two or more cameras 521 may be provided in accordance with its usage environment.

The mike 522 receives an external sound signal through a microphone in a call mode, a recording mode, and an audio recognition mode and processes and coverts the audio signal into electric audio data. The processed audio data is transformed into a format transmittable to a mobile communication base station through the mobile communication module 512 in case of the call mode. The mike 522 may include various noise removing algorithms to remove noise generated in the course of receiving the external sound signal.

The user input module 530 generates input data for allowing the user to control the operation of the display device 500. The user input module 530 may include a keypad, a dome switch, a touch pad (e.g., static pressure/capacitance), a jog wheel, a jog switch, etc.

The sensing module 540 generates sensing signals for controlling the operation of the display device 500 by sensing the current status of the display device 500, such as an open/close status of the display device 500, the position of the display device 500, the presence or non-presence of user contact with the display device 500, orientation of the display device 500, and acceleration/deceleration of the display device 500. For example, if the display device 500 is a slide phone type, the sensing module 540 may sense whether a sliding portion of the display device 500 is open or closed. Also, the sensing module 540 may serve to sense the presence or non-presence of power supply of the power supply module 590, the presence or non-presence of a coupling or other connection between the interface module 570 and an external device. Meanwhile, the sensing module 540 may include a proximity sensor 541.

The output module 550 is intended to output the outputs related to vision, hearing or touch, and may include the display module 551, a sound output module 552, an alarm module 553, and a haptic module 554.

The display module 551 displays (outputs) information processed by the display device 500. For example, if the display device 500 is operated in a call mode, the display module 551 displays a user interface (UI) or Graphicaluser interface (GUI) associated with the call mode. If the display device 500 is in a video call mode or a photographing mode, the display module 551 may display images which are taken and/or received, the UI or the GUI. The display module 551 may include at least one of a liquid crystal display (LCD), a thin film transistor-liquid crystal display (TFT-LCD), an organic light-emitting diode display (OLED), a flexible display and a three-dimensional display (3D display). Some of the above displays may be configured in a transparent type or light-transmitting type to allow the user to view the outside through the display. Such a display may be referred to as a transparent display. A main example of the transparent display includes a transparent OLED (TOLED). A rear structure of the display module 551 may also be configured in a light-transmitting type. In accordance with this structure, the user may view an object located at the rear of the body of the display device through the area occupied by the display module 551 of the body of the display device.

The display device 500 may include two or more display modules 551 in accordance with its implemented configuration. For example, the display device 500 may be provided with a plurality of display modules, which may be spaced apart from one another or integrated to form a single body on one side, or may respectively be arranged on different sides.

In case that the display module 551 and a sensor for detecting a touch action (hereinafter, referred to as 'touch sensor') configure a mutual layer structure (hereinafter, referred to as 'touch screen'), the display module 551 may be used as an input device as well as an output device. In this case, the touch sensor may have a form such as a touch film, a touch sheet, a touch pad or the like.

The touch sensor may be configured to convert a pressure applied to a specific portion of the display module 551 or a variation of a capacitance generated from the specific portion of the display module 551 into an electric input signal. Moreover, the touch sensor may be configured to detect a pressure of a touch as well as a touched position or area. If a touch input to the touch sensor is made, signal(s) corresponding to the touch is transferred to a touch controller. The touch controller processes the signal(s) and then transfers the processed signal(s) to the control module 580. Therefore, the control module 580 may know which portion of the display module 551 has been touched. Referring to FIG. 5, a proximity sensor 541 may be arranged in an internal area of the display device 500 surrounded by the touch screen or near the touch screen. The proximity sensor 541 is the sensor that detects the presence or non-presence of an object approaching a predetermined detecting surface or an object existing near the proximity sensor by using an electromagnetic field strength or infrared ray without mechanical contact. The proximity sensor 541 has durability longer than that of a contact type sensor and also has utility wider than that of the contact type sensor. Examples of the proximity sensor may include a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touch screen is an electrostatic type, the proximity sensor is configured to detect the proximity of the pointer using a variation of electric field based on the proximity of the pointer. In this case, the touch screen (touch sensor) may be classified as the proximity sensor.

The sound output module 552 outputs audio data received from the wireless communication module 510 or stored in the memory module 560 in various modes including a call mode, a recording mode, a voice recognition mode, a broadcast receiving mode and the like. Also, the sound output module 552 outputs a sound signal related to a function (for example, message receiving sound, etc.) performed by the display device 500. The sound output module 5152 may include a receiver, a speaker and a buzzer.

The alarm module 553 outputs a signal for announcing the occurrence of an event in the display device 500. Examples of the event generated in the display device 500 may include a message receiving event, a key signal input event, and a touch input event. The alarm module 553 may output a signal for announcing the occurrence of the event by way of other types such as vibration as well as video or audio signal. Since the video signal or audio signal may be output through the display module 551 or the sound output module 552, the display module 551 and the sound output module 552 may be classified as a part of the alarm module 553.

A haptic module 554 generates various tactile effects that may be sensed by a user. Vibration is a representative one of the tactile effects generated by the haptic module 554. Strength and pattern of the vibration generated by the haptic module 554 are controllable. For example, different vibrations may be output in a manner of being synthesized together or may be output in sequence.

The haptic module 554 may generate various tactile effects as well as the vibration. For example, the haptic module 554 generates the effect attributed to the arrangement of pins vertically moving against a contact skin surface, the effect attributed to the injection/suction power of the air though an injection/suction hole, the effect attributed to the skim over a skin surface, the effect attributed to the contact with electrode, the effect attributed to the electrostatic force, the effect attributed to the representation of hold/cold sense using an endothermic or exothermic device, and the like. The haptic module 554 may be implemented to enable a user to sense the tactile effect through a muscle sense of finger, arm or the like as well as to transfer the tactile effect through a direct contact. Optionally, at least two haptic modules 554 may be provided to the display device 500 in accordance with the corresponding configuration type of the display device 500.

The memory module 560 may generally be used to store various types of programs for the operation of the control module 580, or may temporarily store input/output data (for example, messages, still images, moving images, etc.). The memory module 560 may store data related to vibration and sound of various patterns output during the touch input on the touch screen. The memory module 560 may include at least one type of memory of a flash memory type, a hard disk type, multimedia card micro type, a card-type memory (e.g., SD memory, XD memory, etc.), a random access memory (RAM), a static random access memory (SRAM), a read-only memory (ROM), an electrically erasable programmable read-only memory (EEPROM), a programmable read-only memory (PROM), a magnetic memory, a magnetic disk and an optical disk. Also, the display device 500 may be operation in association with a web storage for performing a storage function of the memory module 560 on Internet.

The interface module 570 serves to interface with all the external devices connected with the display device 500. The interface module 570 receives data from the external devices or is supplied with the power and then transfers the data or power to the respective elements of the display device 500 or enables data within the display device 500 to be transferred to the external devices. For example, the interface module 570 may include a wired/wireless headset port, an external charger port, a wired/wireless data port, a memory card port, a port for coupling to a device having an identity module, audio input/output (I/O) ports, video input/output (I/O) ports, and an earphone port.

The identity module is the chip for storing various kinds of information for authenticating a use authority of the display device 500, and may include a User Identify Module (UIM), a Subscriber Identity Module (SIM), a Universal Subscriber Identity Module (USIM) and/or the like. Also, a device provided with the identity module (hereinafter, referred to as 'identity device') may be manufactured in a type of a smart card. Therefore, the identity module may be connected with the display device 500 through the corresponding port.

When the display device 500 is connected to an external cradle, the interface module 570 becomes a passage for supplying the display device 500 with a power from the cradle or a passage for delivering various command signals input from the cradle by a user to the display device 500. Each of the various command signals input from the cradle or the power may be operated as a signal for enabling the user to recognize that the display device 500 has been exactly loaded in the cradle.

The control module 580 typically controls the overall operations of the display device 500. For example, the control module 580 performs the control and processing associated with voice calls, data communications, video calls, etc. The control module 580 may include a multimedia module 581 that provides multimedia playback. The multimedia module 581 may be configured with the control module 580, or may be implemented separately from the control module 580. Moreover, the control module 580 may perform a pattern recognizing process for recognizing a writing input or a picture drawing input carried out on the touch screen as characters or images, respectively.

The power supply module 590 provides the power required for the operation of the various elements of the display device 500 by receiving the external power and the internal power under the control of the control module 580. The various embodiments described herein may be implemented in a computer or computer-like readable medium using, for example, software, hardware, or some combination thereof.

For a hardware implementation, the embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and other electronic units designed to perform the functions described herein. In some case, the embodiments described in this specification may also be implemented by the control module 580.

For a software implementation, the embodiments such as procedures or functions described in this specification may be implemented with separate software modules, each of which performs one or more of the functions and operations described in this specification. The software codes may be implemented with a software application written in any suitable programming language. Also, the software codes may be stored in the memory module 560, and may be executed by the control module 580.

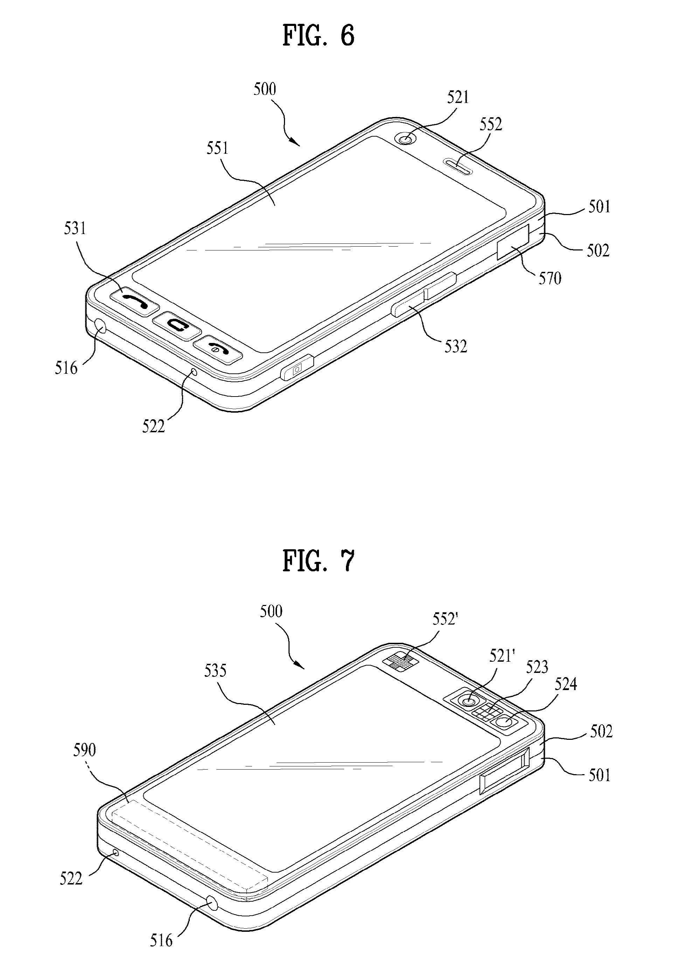

FIG. 6 is a perspective diagram illustrating one side of appearance of a display device according to another embodiment of the present invention. The display device 500 shown in FIG. 6 is provided with a bar type body. However, the present invention is not limited to such a bar type body, and may be applied to various structures such as a slide type, a folder type, a swing type, and a swivel type, in which at least two bodies are movably combined with each other. The body includes a case (casing, housing, cover, and the like) constituting appearance. In this embodiment, the case may be divided into a front case 501 and a rear case 502. Various electronic parts are provided in a space formed between the front case 501 and the rear case 502. At least one middle case may additionally be arranged between the front case 501 and the rear case 502. The cases may be formed by injection molding of a synthetic resin or may be formed of a metal material such as stainless steel (STS) or titanium (Ti). The display module 551, the sound output module 552, the camera 521, the user input modules 530, 531 and 532, the mike 522, and the interface module 570 may be provided in the body of the display device, mainly the front case 501.

The display module 551 occupies most of a main side of the front case 501. The audio output module 552 and the camera 521 are arranged in an area adjacent to one end of both ends of the display module 551, and the user input module 531 and the mike 522 are arranged in an area adjacent to the other end. The user input module 532 and the interface module 570 may be arranged at the sides of the front case 501 and the rear case 502.

The user input module 530 is manipulated to receive a command for controlling the operation of the display device 500, and may include a plurality of manipulating units 531 and 532. The manipulating units 531 and 532 may be referred to as manipulating portions, and any manner may be applied to the manipulating units 531 and 532 if the user manipulates the units with a tactile feeling (tactile manner).

Contents input by the first and second manipulating units 531 and 532 may be set in various manners. For example, a command such as start, end, and scroll may be input to the first manipulating unit 531, and a command such as size control of sound output from the sound output module 552 or switching of the display module 551 to a touch recognition mode may be input to the second manipulating unit 532.

FIG. 7 is a perspective diagram illustrating the other side of appearance of a display device according to another embodiment of the present invention. As shown in FIG. 7, a camera 521' may additionally be provided in the rear side of the body of the display device 500, that is, the rear case 502. The camera r21' may have a photographing direction substantially opposite to that of the camera 521 (see FIG. 6), and may have pixels different from those of the camera 521. For example, it is preferable that the camera 521 has low pixels to take a face of the user and transmit the taken face to the other party in case of video communication while the camera 521' has high pixels as it is general that it takes a normal subject and then does not transmit the taken subject immediately. The cameras 521 and 521' may be provided in the body of the display device to enable rotation or pop-up. A flash 523 and a mirror 524 are additionally arranged to adjoin the camera 521'. The flash 523 illuminates light towards a subject if the camera 521' takes the subject. The mirror 524 may allow the user to view his/her face, etc. if the user takes himself/herself (self photographing) by using the camera 521'.

A sound output module 552' may additionally be arranged at the rear side of the body of the display device. The sound output module 552' may implement a stereo function together with the sound output module 552, and may be used to implement a speaker phone mode in case of communication.

In addition to an antenna for communication, an antenna 516 for receiving a broadcast signal may additionally be arranged at the side of the body of the display device. The antenna 516 constituting a part of the broadcast receiving module 511 may be provided to be ejected from the body of the display device.

The power supply module 590 is provided in the body of the display device 500 to supply the power to the display device 500. The power supply module 590 may be built in the body of the display device, or may be configured to be detachably provided from the outside of the body of the display device.

A touch pad 535 for sensing a touch may additionally be provided in the rear case 502. The touch pad 535 may be configured in a light-transmittive type in the same manner as the display module 551. In this case, if the display module 551 is configured to output vision information from both sides, the vision information may be recognized even through the touch pad 535. The information output from both sides may be controlled by the touch pad 135. Unlike this, a display may additionally be provided in the touch pad 535, whereby the touch screen may be arranged in the rear case 502.

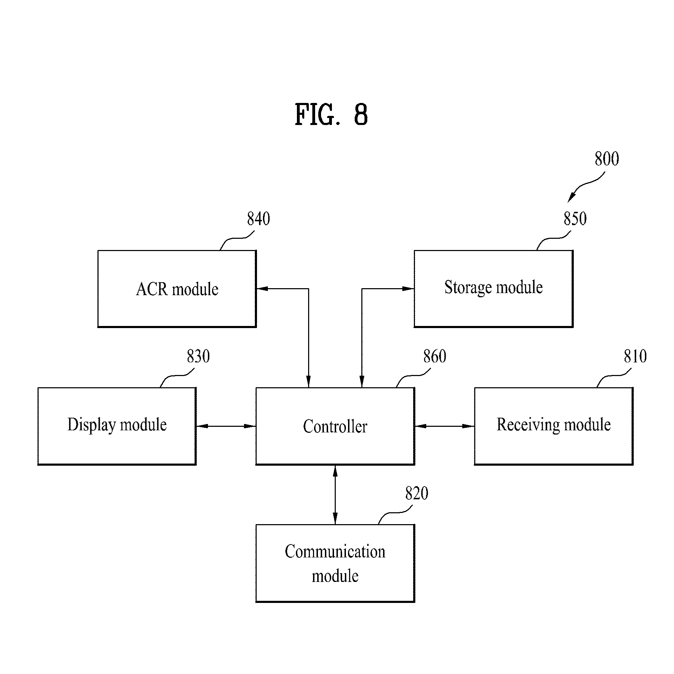

FIG. 8 is a detailed block diagram illustrating modules of a display device according to other embodiment of the present invention. The modules of the display device may be added or changed with reference to FIGs. 1 to 7, and the scope of the present invention should not be determined by the elements disclosed in FIGs. 1 to 8 but basically be defined in accordance with claims. As shown in FIG. 8, the display device 800 includes a receiving module 810, a communication module 820, a display module 820, an ACR module 840, a storage module 850, and a controller 860.

The receiving module 810 may receive an ACR command signal, or may receive a key input signal from an external input means. The external input means may be a remote controller described with reference to FIG. 3 and FIG. 4. The key input signal may be received through various communication modes such as an RF communication mode and IR communication mode. The key input signal may be a control signal such as power on/off, channel selection, and screen setting. The receiving module 810 may correspond to the user interface module described with reference to FIG. 1.

The communication module 820 may perform data communication with the external device. The data communication may be performed in a wire/wireless network manner. The communication module 820 may correspond to the network interface module 103 described with reference to FIG. 1.

The display module 830 may output at least one content or broadcast program to the screen. The display module 830 may output a GUI generated by the ACR module 840 to the screen. The display module 830 may correspond to the display module 551 described with reference to FIG. 5.

If the ACR command signal is received by the receiving module 810, the ACR module 840 may collect ACR information of the content or broadcast program output from the display device 800. In order to collect ACR information of the contents by using ACR, the ACR module 840 may access the ACR information included in the content data or access an external server, which stores the ACR information of the content. The ACR module 840 may transfer the collected ACR information of the content or broadcast program to the controller 860.

The storage module 850 may store the ARC information collected by the ACR module 840. The storage module 850 may correspond to the memory module 105 described with reference to FIG. 1.

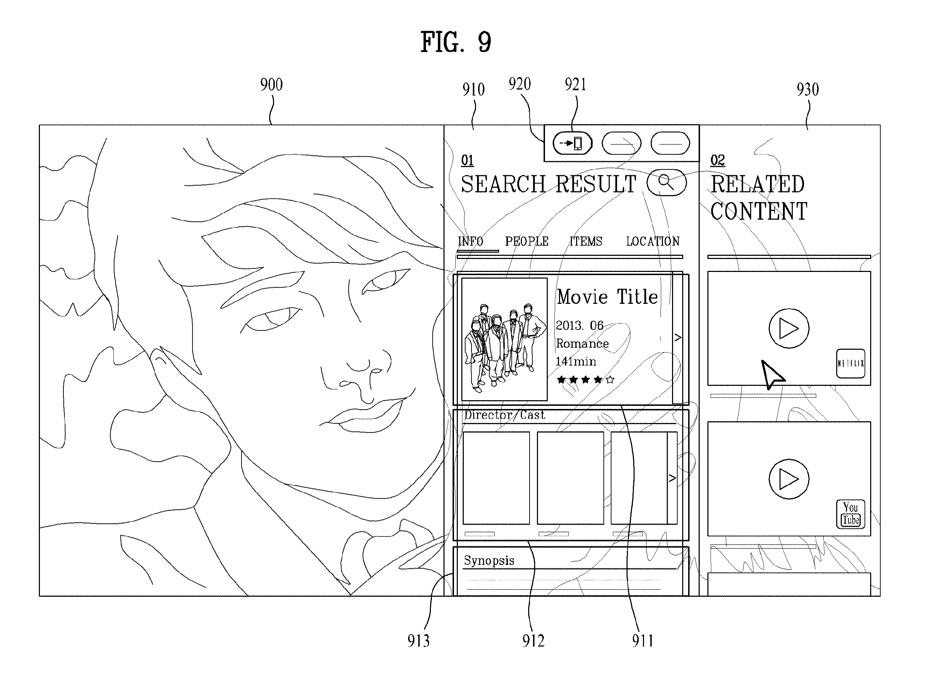

The controller 860 serves to control functions of at least one of the receiving module 810, the communication module 820, the display module 830, the ACR module 840 and the storage module 850, which are shown in FIG. 8. The function of the controller 860 will be described in more detail with reference to FIGs. 9 to 22.

FIG. 9 is a diagram illustrating an example of enabling a display device according to one embodiment of the present invention to collect and output ACR information to a screen.

when an ACR command signal is received through the receiving module, the controller of the display device 900 according to one embodiment of the present invention may perform ACR for the content output on the screen, collect ACR information 911, 912 and 913 of the content by using ACR, generate a GUI 910 including the ACR information 911, 912 and 913 of the content and an ACR information control icon 920, on the basis of output priority of the collected ACR information 911, 912 and 913 according to the type of the content, and output the GUI 910 on the screen.

The ACR information of the content may include type information of the content, title information of the content, character information related to the content, product information related to the content, position information related to the content, and event information related to the content.

The output priority of the ACR information may be predetermined so that different output priorities may be obtained depending on the type of the content.

The GUI 910 may be output to the screen in the form of a semi-transparent panel, and a transparency of the GUI may be changed by the user.

Also, the controller of the display device 900 may perform a control operation to output a recommended content page 930, which includes recommended content information, to the screen together with the GUI 910. The recommended content may be a content related to a current content. For example, if the content currently output to the screen is a movie, the recommended content may be a movie of which main character is the same as the main character of the content currently output to the screen, or may be a movie produced by the same director as who has produced the content currently output to the screen. Also, the recommended content page 930 may be output to the screen in the form a semi-transparent panel.

The GUI 910 may include the ACR information 911, 912 and 913 and the ACR information control icon 920. The output priority of the ACR information 911, 912 and 913 may be determined in accordance with the type of the content. The type of the content may be classified into a movie, a drama, a commercial film, and music video. For example, if the content is a movie, the ACR information having the first output priority may be movie title information 911. And, the ACR information having the second output priority may be character information 912. Moreover, the ACR information having the third output priority may be synopsis information 913.

Also, the GUI 910 may include the ACR information control icon 920. The ACR information control icon 920 may be UI designed to allow the user to quickly perform a secondary additional process by using the ACR information primarily provided to the user. For example, a mobile sending icon 921 may be UI designed to transmit the ACR information currently output to the display device 900 to the external device connected with the display device 900.

In this way, it is advantageous in that the user may preferentially receive ACR information having different priorities in accordance with a type of each content. It is also advantageous in that the user may quickly and easily different tasks by using the ACR information.

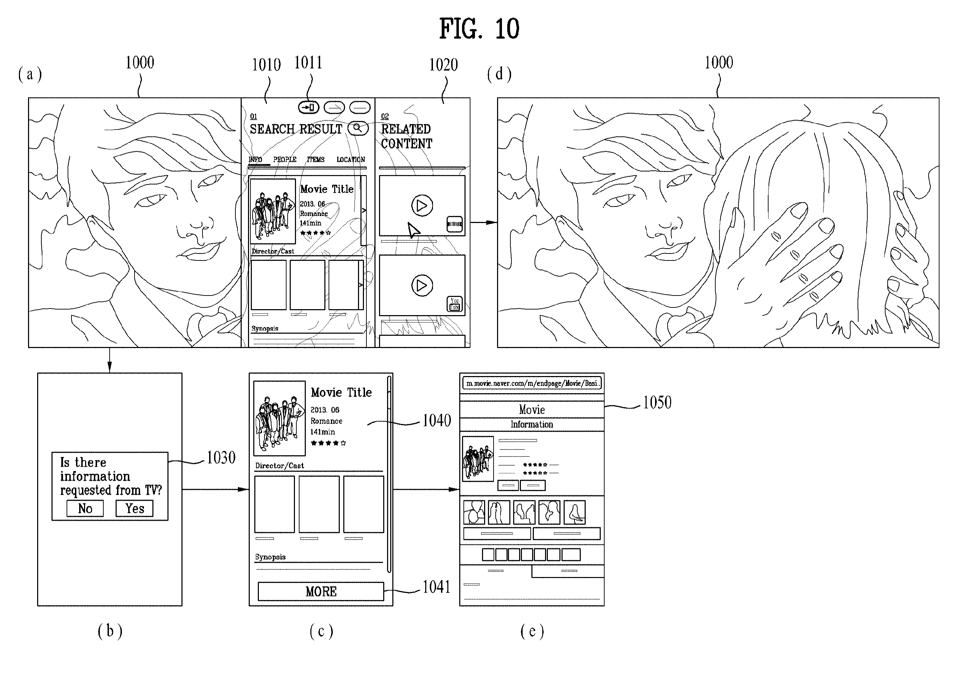

FIG. 10 is a diagram illustrating an example of enabling a display device according to one embodiment of the present invention to transmit ACR information to an external device.

The controller of the display device 1000 according to one embodiment of the present invention may perform pairing with the external device and transmit a signal, which is intended to output ACR information of contents included in a GUI 1010 from the paired external device, to the external device. For example, as shown in (a) of FIG. 10, if an ACR command signal is received through the receiving module, the controller of the display device 1000 may collect ACR information by performing ACR for a content which is currently output to the screen, determine output priority of the collected ACR information and output the GUI 1010, which includes the ACR information and an ACR information control icon 1020, to the screen. Also, the controller of the display device 1000 may perform a control operation to output a recommended content page 1020, which includes recommended content information, to the screen together with the GUI 1010. The GUI 1010 may include a mobile sending icon 1011 as the ACR information control icon. Also, as shown in (b) of FIG. 10, if a signal for allowing the user to select the mobile sending icon 1011 is received through the receiving module, the controller of the display device 1000 may perform a control operation to transmit a signal, which is intended to output a pop-up window 1030 for identifying ACR information output request, to the external device paired with the display device 1000. If the ACR information output request is identified through the pop-up window 1030, as shown in (c) of FIG. 10, the controller of the external device paired with the display device 1000 may perform a control operation to output an ACR information page 1040 to the screen. And at the same time, as shown in (d) of FIG. 10, the controller of the display device 1000 may perform a control operation to disappear the GUI 1010 and the recommended content page 1020 from the screen. Moreover, as shown in (e) of FIG. 10, if the user selects a more viewing icon 1041 included in the ACR information page 1040, the controller of the external device may perform a control operation to output a web browser 1050, which searches for the content, to the screen on the basis of the ACR information.

Moreover, if the controller of the display device 1000 according to one embodiment of the present invention transmits ACR information to the external device paired with the display device 1000, the controller of the display device 1000 may select ACR information suitable for the external device paired with the display device 1000 from the collected ACR information and transmit the selected ACR information to the external device paired with the display device 1000. For example, if the external device is a smart phone, the controller of the display device 1000 may select application information related to a phone number or the current content from the collected ACR information and transmit the selected application information to the smart phone. In this way, the user who uses two or more devices may use the ACR information more conveniently.

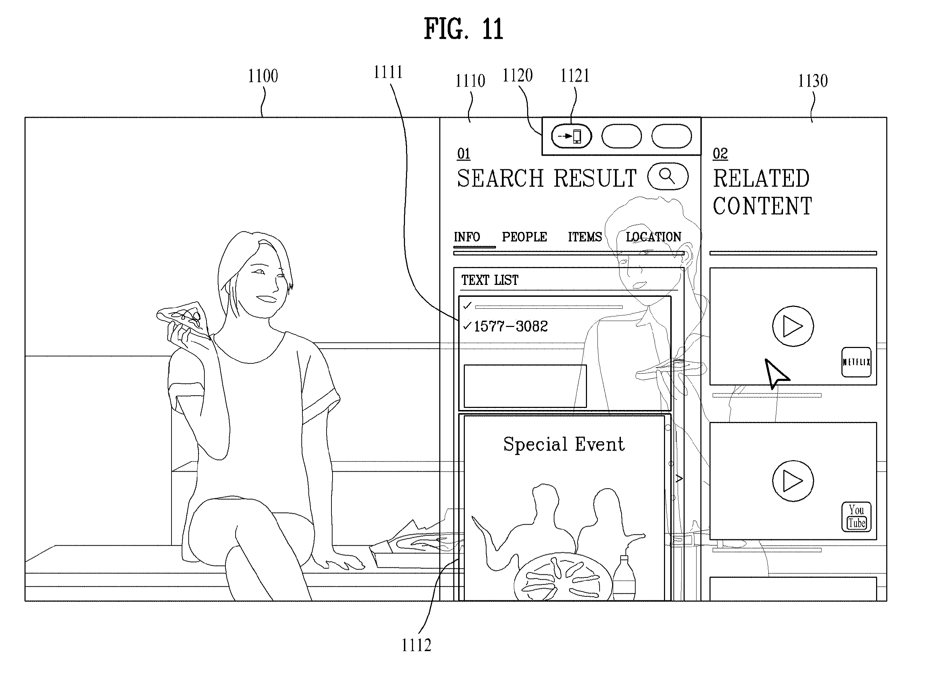

FIG. 11 is a diagram illustrating an example of enabling a display device according to one embodiment of the present invention to collect ACR information and output the collected ACR information to a screen.

If an ACR command signal is received through the receiving module, the controller of the display device 1100 according to one embodiment of the present invention may perform ACR for the content output on the screen, collect ACR information 1111 and 1112 of the content by using ACR, generate a GUI 1110, which includes the ACR information 1111 and 1112 of the content and an ACR information control icon 1120, on the basis of output priority of the collected ACR information 1111 and 1112 according to the type of the content, and output the GUI 1110 on the screen.

Moreover, if the ACR command signal is received through the receiving module, the controller of the display device 1100 according to one embodiment of the present invention may perform a control operation to generate a GUI, which includes ACR information and ACR information control icon, at a predetermined time and output the generated GUI to the screen after collecting every ACR information included in an interval selected in accordance with a predetermined selection process. For example, if five commercial film contents are included between the first content and the second content, the controller of the display device 1100 according to one embodiment of the present invention may collect ACR information by performing ACR for all of the five commercial film contents and generate the GUI, which includes ACR information and ACR information control icon, at the time when the fifth commercial film content ends or until an ACR request release command is received. At this time, the controller of the display device 1100 may collect ACR information and store the collected ACR information in a stack structure. Also, the controller of the display device 1100 according to one embodiment of the present invention may perform a control operation to transmit the ACR information collected for a predetermined interval to the external device paired with the display device. Accordingly, it is advantageous in that the user may receive all kinds of ACR information collected from the time when the ACR is requested to the time when the ACR request is released, at one time, without transmitting the ACR command signal one by one for the predetermined interval.

The ACR information of the content may include type information of the content, title information of the content, character information related to the content, product information, position information and event information.

The output priority of the ACR information may previously set to have different output priorities depending on the type of the content.

The GUI 1110 may be output to the screen in the form of a transparent panel, and its transparency may be changed by the user.

Also, the controller of the display device 1100 may perform a control operation to output a recommended content page 1130, which includes recommended content information, to the screen together with the GUI 1110. The recommended content may be the content related to the current content. For example, if the content currently output to the screen is a commercial film, the recommended content may be another commercial film of which model is the same character as the character of the commercial film currently output to the screen, or may be another commercial film produced by the same brand as the brand of the commercial film currently output to the screen. Also, the recommended content page 1130 may be output to the screen in the form of a transparent panel.

The GUI 1110 may include the ACR information 1111 and 1112 and the ACR information control icon 1120. The output priority of the ACR information 1111 and 1112 may be determined in accordance with the type of the content. The type of the content may be classified into a movie, a drama, a commercial film, and music video. For example, if the content is a commercial film, the ACR information having the first output priority may be brand title information 1111. And, the ACR information having the second output priority may be phone number information 1112. Moreover, the ACR information having the third output priority may be event information 1113.

Also, the GUI 1110 may include the ACR information control icon 1120. The ACR information control icon 1120 may be UI designed to allow the user to quickly perform a secondary additional process by using the ACR information primarily provided to the user. For example, a mobile sending icon 1121 may be UI designed to transmit the ACR information currently output to the display device 1100 to the external device connected with the display device 1100.

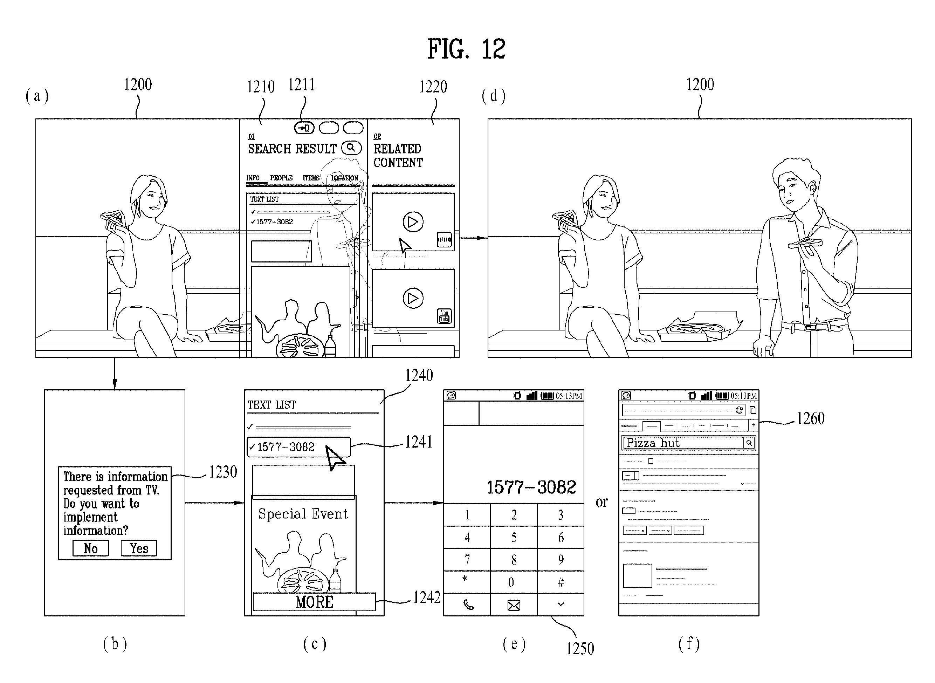

FIG. 12 is a diagram illustrating another example of enabling a display device according to one embodiment of the present invention to transmit ACR information to an external device.

The controller of the display device 1200 according to one embodiment of the present invention may perform pairing with the external device and transmit a signal, which is intended to output ACR information of contents included in a GUI 1210 from the paired external device, to the external device.

For example, as shown in (a) of FIG. 12, if an ACR command signal is received through the receiving module, the controller of the display device 1200 may collect ACR information by performing ACR for a content which is currently output to the screen, determine output priority of the collected ACR information and output the GUI 1210, which includes the ACR information and an ACR information control icon, to the screen. Also, the controller of the display device 1200 may perform a control operation to output a recommended content page 1220, which includes recommended content information, to the screen together with the GUI 1210. The GUI 1210 may include a mobile sending icon 1211 as the ACR information control icon. Also, as shown in (b) of FIG. 12, if a signal for allowing the user to select the mobile sending icon 1211 is received through the receiving module, the controller of the display device 1200 may perform a control operation to transmit a signal, which is intended to output a pop-up window 1230 for identifying ACR information output request, to the external device paired with the display device 1200. If the ACR information output request is identified through the pop-up window 1230, as shown in (c) of FIG. 12, the controller of the external device paired with the display device 1200 may perform a control operation to output an ACR information page 1240 to the screen. And at the same time, as shown in (d) of FIG. 12, the controller of the display device 1200 may perform a control operation to disappear the GUI 1210 and the recommended content page 1220 from the screen. Moreover, as shown in (e) of FIG. 12, if the user selects a call connection icon 1241 included in the ACR information page 1240, the controller of the external device may perform a control operation to output a call connection page 1250 to the screen on the basis of the ACR information.

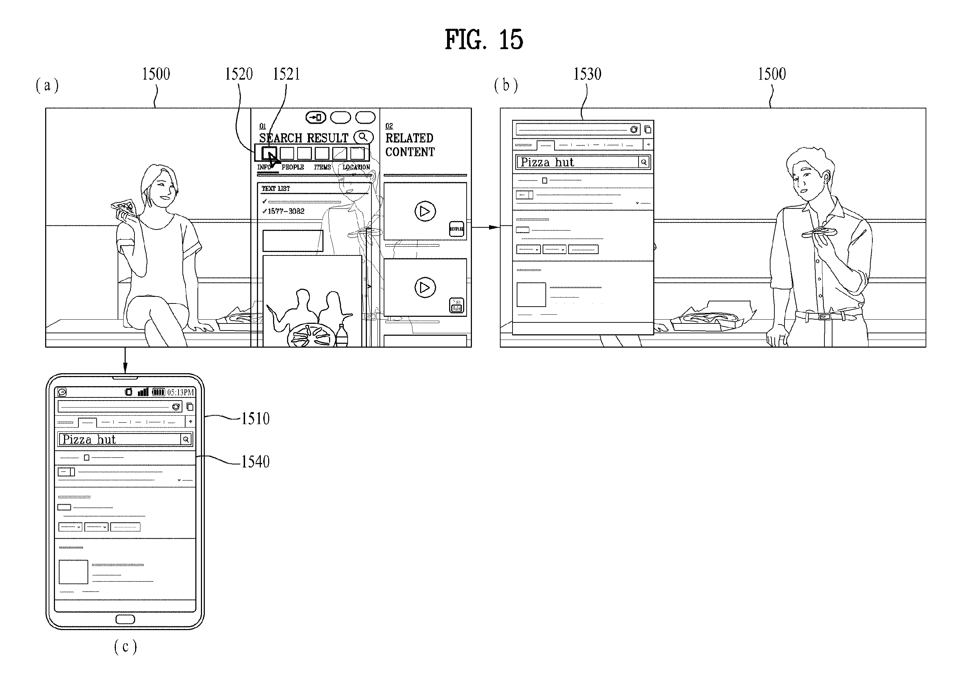

Moreover, if the controller of the display device 1000 according to one embodiment of the present invention transmits ACR information to the external device paired with the display device 1000, the controller of the display device 1000 may select ACR information suitable for the external device paired with the display device 1000 from the collected ACR information and transmit the selected ACR information to the external device paired with the display device 1000. For example, if the external device is a smart phone, the controller of the display device 1000 may select application information related to a phone number or the current content from the collected ACR information and transmit the selected application information to the smart phone. In this way, the user who uses two or more devices may use the ACR information more conveniently. The ACR information control icon will be described in more detail with reference to FIGs. 15 to 17.

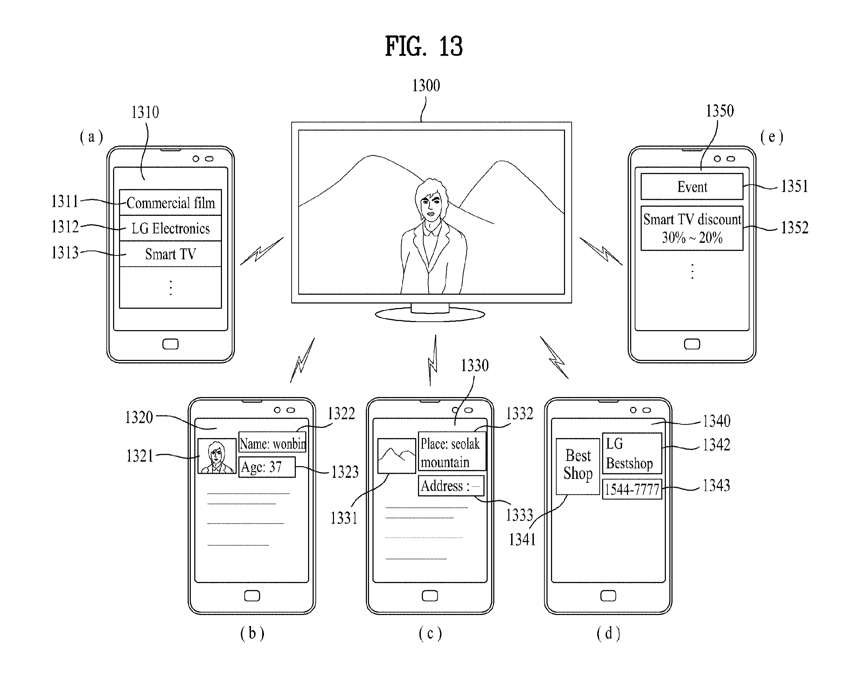

FIG. 13 is a diagram illustrating an example of enabling a display device according to one embodiment of the present invention to collect ACR information by performing ACR.

If an ACR command signal is received through the receiving module, the controller of the display device 1300 according to one embodiment of the present invention may perform ACR for the content output on the screen and collect ACR information 1211, 1320, 1330, 1340 and 1350 of the content by using ACR. The ACR information 1310, 1320, 1330, 1340 and 1350 of the content may be different from one another in accordance with the type of the content, and the case where the type of the content is a commercial film will be described in FIG. 13. As shown in (a) of FIG. 13, the first ACR information 1310 is commercial film analysis information, and may include type information 1311 of the content, which indicates that the content currently output to the screen is a commercial film, brand information 1312, which provides a commercial film, and category information 1313 of a product which is a target of a commercial film. As shown in (b) of FIG. 13, the second ACR information 1320 is information on a main character of a commercial film, and may include character information such as a thumbnail 1321 of the main character, a name 1322 of the main character, and an age 1323 of the main character. As shown in (c) of FIG. 13, the third ACR information 1330 is information on a place where a commercial film is taken, and may include a thumbnail 1331 of the place, a place name 1332, and address information of the corresponding place. As shown in (d) of FIG. 13, the fourth ACR information 1340 is E-commerce information of a commercial film brand, and may include E-commerce thumbnail 1341, E-commerce title information 1342, and a phone number information 1343. Also, as shown in (e) of FIG. 13, the fifth ACR information 1350 is information on an event of a commercial film, and may include title information 1351 of the event and detail information 1352 of the event.

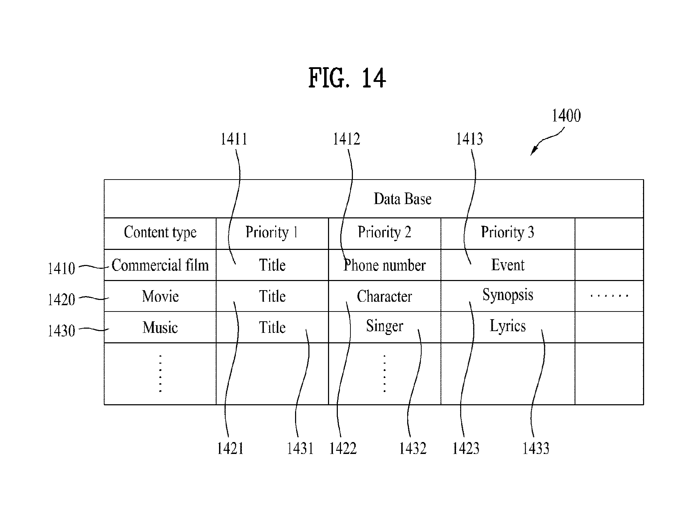

FIG. 14 is a diagram illustrating an example of enabling a display device according to one embodiment of the present invention to store output priority of ACR information in a data base in accordance with a type of contents.

As shown in FIG. 14, a storage module of the display device according to one embodiment of the present invention may store output priority of ACR information based on the type of the content in a data base 1400. If an ACR command signal is received through the receiving module, a controller of the display device 1400 may perform ACR for the content output on the screen, collect ACR information of the content by using ACR, detect the output priority of the ACR information based on the type of the content by accessing the data base 1400, and generate a GUI for outputting the ACR information.

The output priority of the ACR information may be varied depending on the type of the content. For example, as shown in FIG. 14, if the type of the content is a commercial film 1410, the ACR information having the first output priority 1411 may be title information of the commercial film, the ACR information having the second output priority 1412 may be phone number information, and the ACR information having the third output priority 1413 may be event information. Also, if the type of the content is a movie 1420, the ACR information having the first output priority 1421 may be title information of the movie, the ACR information having the second output priority 1422 may be character information, and the ACR information having the third output priority 1423 may be synopsis information. Also, if the type of the content is a music 1430, the ACR information having the first output priority 1431 may be title information of the music, the ACR information having the second output priority 1432 may be singer information, and the ACR information having the third output priority 1433 may be song information. In this way, it is designed that the output priority of the ACR information is varied depending on the type of the content, whereby the user may preferentially receive desired information.

FIG. 15 is a diagram illustrating an example of enabling a display device according to one embodiment of the present invention to perform a secondary process by receiving a command of a user through an ACR information control icon.

If an ACR command signal is received through the receiving module, the controller of the display device 1500 according to one embodiment of the present invention may perform a control operation to perform ACR for the content output on the screen, collect ACR information of the content by using ACR, generate a GUI including the ACR information of the content and an ACR information control icon based on an output priority of the collected ACR information according to the type of the content, and output the GUI on the screen. The ACR information control icon may include a first control icon implementing a web browser, a second control icon performing call connection, and a third control icon outputting a recommended content page that includes recommended content information associated with the content.

For example, as shown in (a) of FIG. 15, the controller of the display device 1500 may perform a control operation to output a GUI, which includes an ACR information control icon 1520, on the screen. If a signal for selecting the first control icon 1521, which implements a web browser, is sensed through the GUI, as shown in (b) of FIG. 15, the controller of the display device 1500 may perform a control operation to output the web browser 1530, which searches for the content, on the screen on the basis of the title information of the content. Also, if the signal for selecting the first control icon 1521, which implements a web browser, is sensed through the GUI, as shown in (c) of FIG. 15, the controller of the display device 1500 may perform a control operation to transmit a signal, which allows the external device 1510 paired with the display device 1500 to output the web browser 1540 for searching for the content, to the screen on the basis of the title information of the content, to the external device 1510.

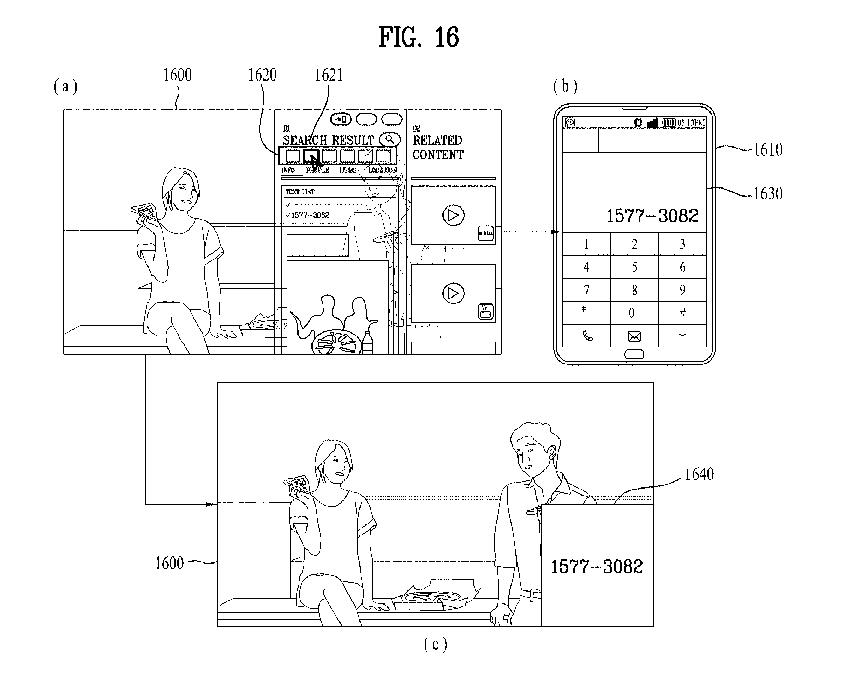

FIG. 16 is a diagram illustrating another example of enabling a display device according to one embodiment of the present invention to perform a secondary process by receiving a command of a user through an ACR information control icon.

If an ACR command signal is received through the receiving module, the controller of the display device 1600 according to one embodiment of the present invention may perform a control operation to perform ACR for the content output on the screen, collect ACR information of the content by using ACR, generate a GUI including the ACR information of the content and an ACR information control icon, on the basis of output priority of the collected ACR information according to the type of the content, and output the GUI on the screen. The ACR information control icon may include a first control icon implementing a web browser, a second control icon performing call connection, and a third control icon outputting a recommended content page that includes recommended content information associated with the content.

For example, as shown in (a) of FIG. 16, the controller of the display device 1600 may perform a control operation to output a GUI, which includes an ACR information control icon 1620, on the screen. If a signal for selecting the second control icon 1621, which implements call connection, is sensed through the GUI, as shown in (b) of FIG. 16, the controller of the display device 1600 may perform a control operation to transmit a signal, which allows the external device 1610 paired with the display device 1600 to perform call connection 1630, to the external device 1610. Also, if the display device 1600 performs call connection 1640 by itself, as shown in (c) of FIG. 16, the controller of the display device 1600 may perform a control operation to output a content and at the same time perform call connection 1640.

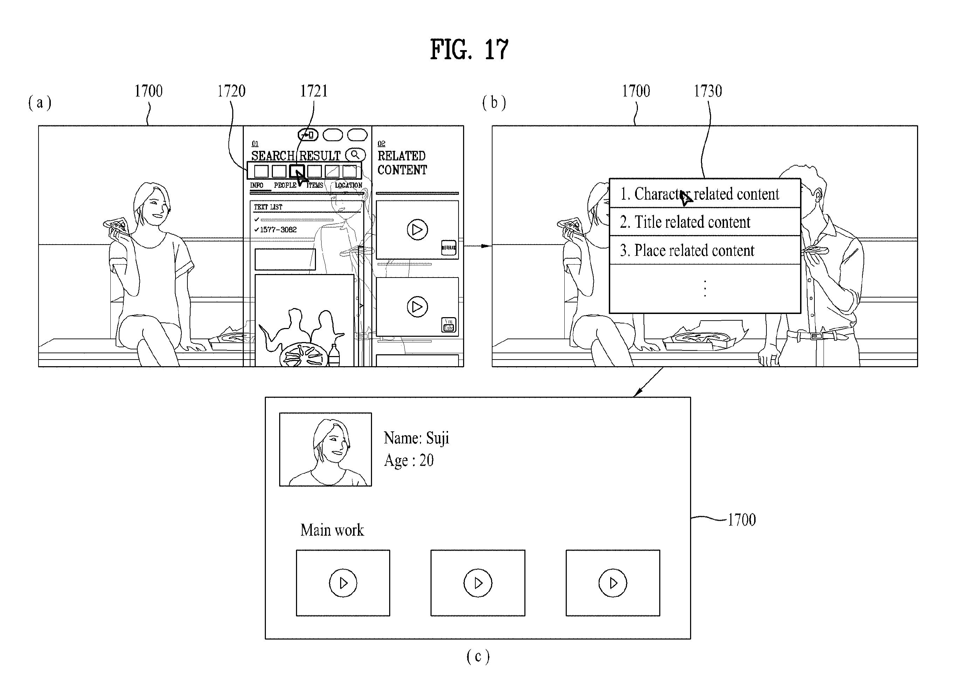

FIG. 17 is a diagram illustrating other example of enabling a display device according to one embodiment of the present invention to perform a secondary process by receiving a command of a user through an ACR information control icon.

If an ACR command signal is received through the receiving module, the controller of the display device 1700 according to one embodiment of the present invention may perform a control operation to perform ACR for the content output on the screen, collect ACR information of the content by using ACR, generate a GUI, which includes the ACR information of the content and an ACR information control icon, on the basis of output priority of the collected ACR information according to the type of the content, and output the GUI on the screen. The ACR information control icon may include a first control icon, which implements a web browser, a second control icon, which implements call connection, and a third control icon, which outputs a recommended content page that includes recommended content information associated with the content.

For example, as shown in (a) of FIG. 17, the controller of the display device 1700 may perform a control operation to output a GUI, which includes an ACR information control icon 1720, on the screen. If a signal for selecting the third control icon 1721, which outputs the recommended content page that includes the recommended content information associated with the content, is sensed through the GUI, as shown in (b) of FIG. 17, the controller of the display device 1700 may perform a control operation to output a pop-up window 1730 for selecting a specific one of the recommended content pages associated with the content currently output on the screen, to the screen. For example, the user may select a specific one of the recommended content page related to a character within the content and the recommended content page related to title information of the content or place information of the content. If the user selects a signal for selecting the recommended content page related to a character within the content, the controller of the display device 1700 may perform a control operation to output the recommended content page 1740, which includes information on another content where the character within the above content appears, to the screen.

As the display device is designed as shown in FIGs. 15 to 17, it is advantageous in that the user may primarily receive the ACR information in accordance with the output priority and may quickly and easily perform additional process by secondarily using the ACR information control icon.

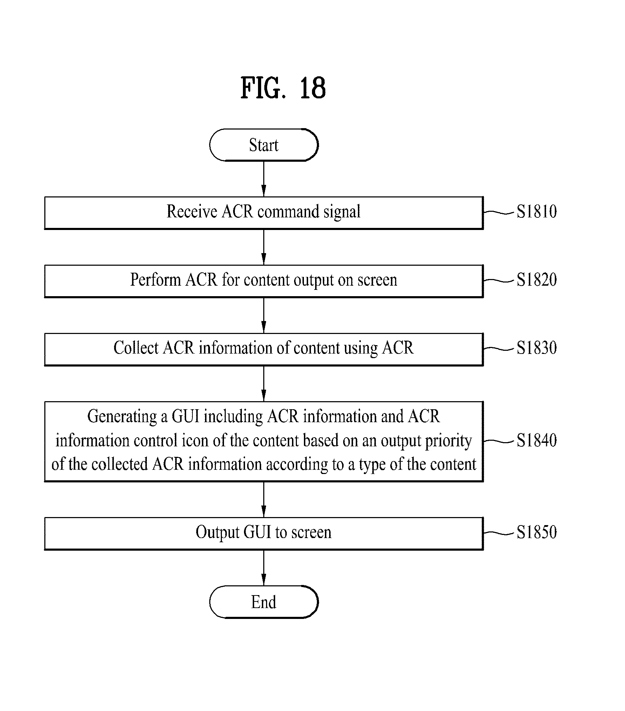

FIG. 18 is a flow chart illustrating a method for controlling a display device according to one embodiment of the present invention. As shown in FIG. 18, the display device may receive an ACR command signal (S1810), perform ACR for a content which is output to the screen (S1820), collect ACR information of the content by using the ACR (S1830), generate a GUI including the ACR information of the content and an ACR information control icon based on an output priority of the collected ACR information according to the type of the content (S1840), and output the GUI on the screen (S1850). Since the detailed description of each step has been described as above, its repeated description will be omitted.

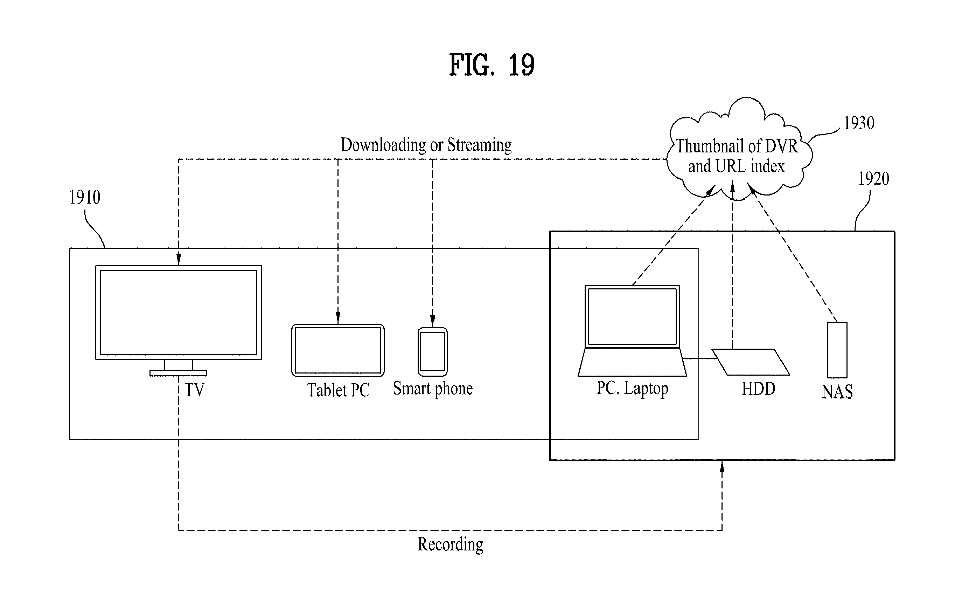

FIGs. 19 to 22 are diagrams illustrating an example of enabling a display device according to one embodiment of the present invention to perform a home cloud function together with an external device. Hereinafter, a TV will be described as an example of the display device. Moreover, the following description may equally be applied to another display device other than the TV.

A home cloud may be used between various display devices, which provide a display function, and a storage device. The home cloud may serve to upload and download a digital video recorder (DVR) and media files and perform streaming for the DVR and media files in the storage device owned by the user within an access point (AP) such as TV.

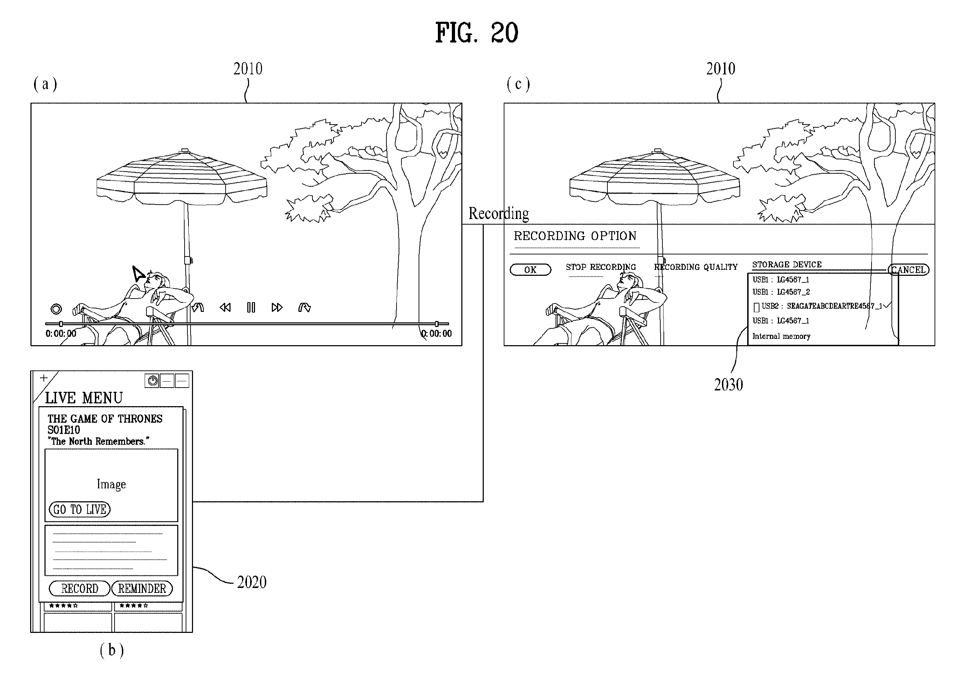

As shown in FIG. 19, a device group constituting the home cloud may be classified into three groups in accordance with the role of the device. The first group is to perform streaming for the DVR and download the DVR, and may include a TV, a tablet PC, a smart phone, a PC and a lap top computer. The second group is a network storage device, and may include a PC, a lap top computer, a hard disk drive (HDD) connected to the PC, and a network attached storage (NAS). The third group includes an external server that provides a storage space such as a cloud server. The first group, the second group and the third group of the home cloud may share storage medium, whereby memory efficiency may be enhanced. For example, if the device included in the first group records a broadcast program, the broadcast program may be stored in the second group. If a new broadcast program is stored in the second group, thumbnail and uniform resource locator (URL) index of a file may be stored in the third group. Afterwards, if a user of at least one device included in the first group selects the thumbnail of the file stored in the third group, the user may download the broadcast program or perform streaming for the broadcast program from the second group where the file is actually stored. Hereinafter, these device groups will be described in more detail with reference to FIGs. 20 to 22.

As shown in (a) of FIG. 20 and (b) of FIG. 20, devices 2010 and 2020 belonging to the first group may record a broadcast program. In this case, recording may include all of recording functions such as instant recording and reserved recording. At this time, if a command desired by the user to perform recording is received by the device 2010 belonging to the first group, as shown in (c) of FIG. 20, the controller of the device 2010 belonging to the first group may perform a control operation to output a storage means list 2030 for storing recording data of the broadcast program to the screen. Title of each storage means and storage space information may be displayed in the storage means list 2030. A plurality of storage means that may store the broadcast program may be listed in the storage means list 2030. Also, activation/deactivation of each storage means may be displayed in the storage means list 2030. Moreover, the storage means listed in the storage means list 2030 may be displayed in the order of predetermined priority.

Also, the user of the device 2110 belonging to the first group may identify a data list 2120 stored in the second group of the home cloud. The data list 2120 stored in the second group may display information on a broadcast program recorded for each of data 2130 and 2140. The information on the broadcast program may include a thumbnail image 2131, a program title 2132, channel information or playback interval information 2133 of the broadcast program, and device information 2134 of the second group where the broadcast program is stored. If the device of the second group is powered off and cannot access data, the data list 2120 may vary transparency to notify the user of non-accessible data 2140 and output the varied transparency. Moreover, if the user selects the stored broadcast program data 2130, the device 2110 belonging to the first group may output a pop-up window for determining whether to download or perform streaming for the selected broadcast program data 2130, to the screen. Also, the user may store all or some of the data included in the data list 2120 stored in the second group in the cloud server.

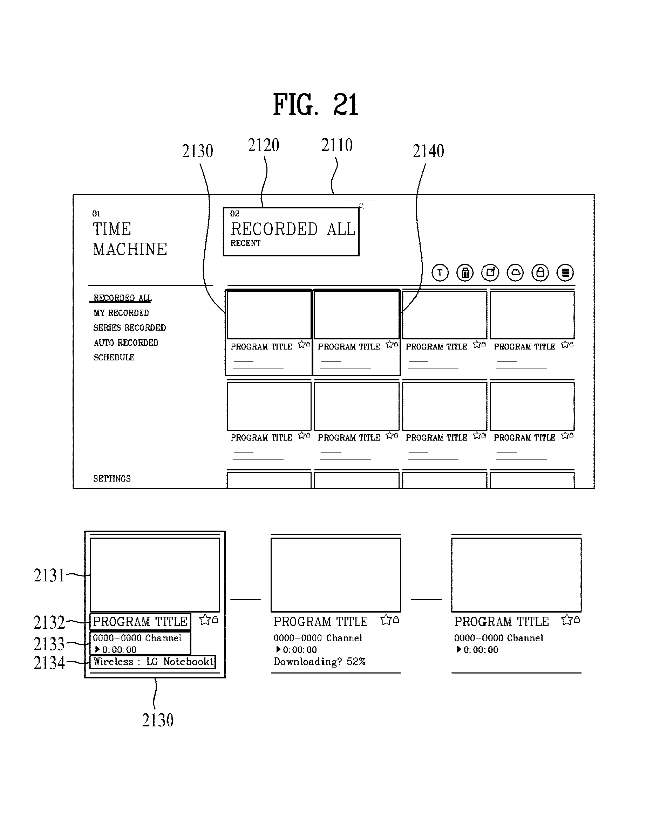

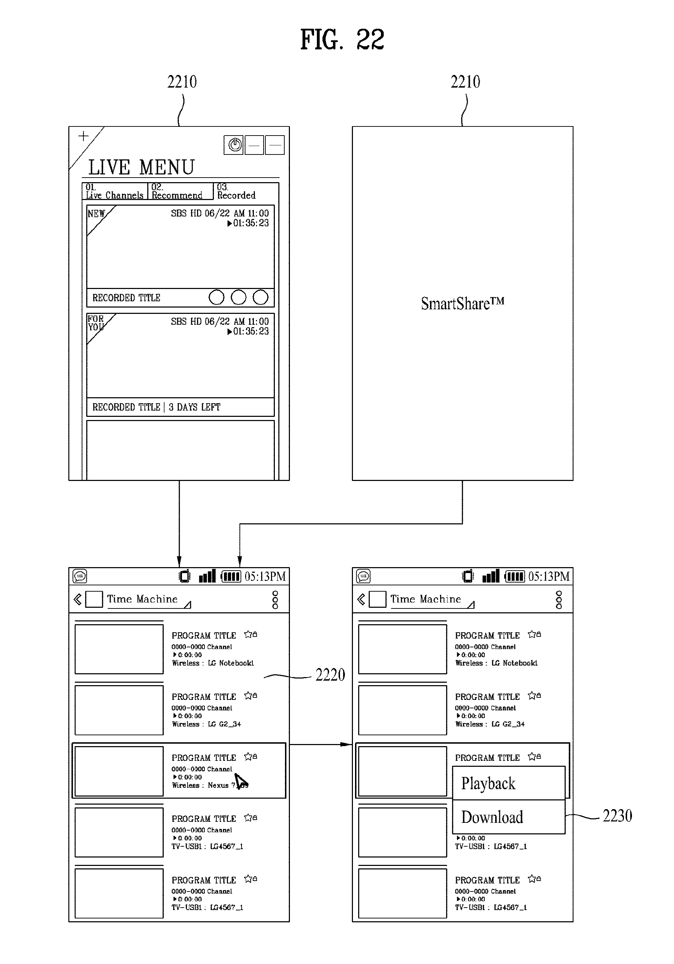

As shown in FIG. 22, even in case that the device belonging to the first group is a smart phone 2210, the same process as that of FIG. 21 may be performed. If the smart phone 2210 outputs a data list 2220 stored in the second group, the user may select a specific one of contents included in the data list 2220 stored in the second group. If a selection signal of the content is received, the controller of the smart phone may output a pop-up window 2230 for determining whether to download or perform streaming for the content, to the screen. Also, in case of streaming, the user may play the content from the smart phone 2210 or another device connected with the smart phone 2210.

As the device is designed as shown in FIG. 19 and FIG. 22, if the user uses a plurality of display devices within the same AP, the memory may be used efficiently.

Although the description may be made for each of the drawings for convenience of description, the embodiments of the respective drawings may be incorporated to achieve a new embodiment. Also, the display device and the method for controlling the same are not limited to the aforementioned embodiments, and all or some of the aforementioned embodiments may selectively be configured in combination so that various modifications may be made in the aforementioned embodiments.

It will be apparent to those skilled in the art that the present specification can be embodied in other specific forms without departing from the spirit and essential characteristics of the specification. Thus, the above embodiments are to be considered in all respects as illustrative and not restrictive. The scope of the specification should be determined by reasonable interpretation of the appended claims and all change which comes within the equivalent scope of the specification are included in the scope of the specification.

Also, in this specification, both the product invention and the method invention have been described, and description of both inventions may be made complementally if necessary.

## Claims

1. A method for controlling a display device, the method comprising:
receiving an automatic content recognition, ACR, command signal;
performing ACR for a content output on a screen;
collecting ACR information of the content by using ACR;
generating a Graphical User Interface ,GUI, including ACR information and ACR information control icon of the content based on an output priority of the collected ACR information according to a type of the content; and
outputting the GUI to the screen.

2. The method according to claim 1, wherein the ACR command signal is received from an external input means connected with the display device.

3. The method according to claim 1, wherein the collecting ACR information of the content by using ACR includes collecting the ACR information by accessing the ACR information included in content data or collecting the ACR information by accessing an external server storing the ACR information of the content.

4. The method according to claim 1, wherein the ACR information of the content includes type information of the content, title information of the content, character information related to the content, product information, position information and event information.

5. The method according to claim 1, wherein the output priority of the ACR information is predetermined to have different output priorities depending on the type of the content.

6. The method according to claim 1, wherein the ACR information control icon includes a first control icon implementing a web browser, a second control icon performing call connection, and a third control icon outputting a recommended content page that includes recommended content information associated with the content.

7. The method according to claim 1, further comprising:
performing pairing with an external device; and
transmitting a signal allowing the paired external device to output ACR information of the content included in the GUI to the external device.

8. The method according to claim 1,
wherein the GUI is output to the screen in the form of a semi-transparent panel, and wherein a transparency of the GUI is varied by a user.

9. A display device comprising:
a receiving module configured to receive an automatic content recognition, ACR, command signal from an external input means;
a communication module configured to perform data communication with an external device;
a display module configured to output a content to a screen;
an ACR module configured to collect ACR information of the content by performing ACR;
a storage module configured to store the ACR information collected by the ACR module; and
a controller configured to control an operation of the display device,
wherein the controller is further configured to perform ACR for the content output on the screen when the ACR command signal is received through the receiving module, collect the ACR information of the content by using ACR, generate a Graphical User Interface, GUI, including ACR information and ACR information control icon of the content based on an output priority of the collected ACR information according to a type of the content, and output the GUI to the screen.

10. The display device according to claim 9, wherein the ACR module collects the ACR information by accessing the ACR information included in content data or collects the ACR information by accessing an external server storing the ACR information of the content.

11. The display device according to claim 9, wherein the ACR information of the content includes type information of the content, title information of the content, character information related to the content, product information, position information and event information.

12. The display device according to claim 9, wherein the output priority of the ACR information is predetermined to have different output priorities depending on the type of the content.

13. The display device according to claim 9, wherein the ACR information control icon includes a first control icon implementing a web browser, a second control icon performing call connection, and a third control icon outputting a recommended content page that includes recommended content information associated with the content.

14. The display device according to claim 9, wherein the controller is further configured to perform pairing with an external device and transmit a signal allowing the paired external device to output ACR information of the content included in the GUI to the external device.

15. The display device according to claim 9,
wherein the GUI is output to the screen in the form of a semi-transparent panel, and wherein a transparency of the GUI is varied by a user.
